# EUROPÄISCHE PATENTSCHRIFT

(11) **EP 1 728 904 B1**
(45) Veröffentlichungstag und Bekanntmachung des Hinweises auf die Patenterteilung: **08.08.2007**
(21) Anmeldenummer: 05011877.7
(22) Anmeldetag: 02.06.2005
(51) Int. Cl.: D03D 1/02

(54) **Gewebe für Airbags**
Fabric for airbags
Tissu pour coussins gonflables

(43) Veröffentlichungstag der Anmeldung: 06.12.2006
(73) Patentinhaber: Polyamide High Performance GmbH, 42103 Wuppertal (DE)
(72) Erfinder: Köhnen, Ralf, 42117 Wuppertal (DE)
(74) Vertreter: Muth, Arno

(56) Entgegenhaltungen:
- EP-A- 0 738 793
- EP-A- 1 475 475
- WO-A-90/09295
- WO-A-03/078711
- DE-A1- 10 328 632
- DE-A1- 19 807 572
- DE-C1- 19 653 028
- DE-U1- 29 615 402
- US-A- 4 256 148
- US-A1- 2005 011 578

## Beschreibung

Die Erfindung betrifft ein Gewebe für Airbags mit Kett- und Schussgarnen, wobei zumindest überwiegend die Schussgarne im Gewebe jeweils aus mindestens zwei nebeneinander verlaufenden Garnen gebildet sind.

Ein derartiges Gewebe ist beispielsweise aus DE 198 07 572 A1 bekannt. Es ist allgemein bekannt, dass das gleichzeitige Einbringen von zwei oder mehr Schussgarnen in das gleiche Webfach dazu führt, dass die eingetragenen Schussgarne unterschiedliche Längen und/oder unterschiedliche Garnspannungen aufweisen, so dass durch den gleichzeitigen Eintrag der Schussgarne sehr ungleichmäßige Gewebe entstehen, die zur Herstellung von Airbags nicht geeignet sind. Insofern wird in DE 198 07 572 A1 empfohlen, die Schussgarne beim Herstellen derartiger Gewebe nacheinander in das gleiche Webfach einzutragen. Werden die Schussgarne nacheinander in das Webfach eingetragen, reduziert sich naturgemäß die erreichte Webleistung.

Aufgabe der vorliegenden Erfindung ist es, ein Gewebe für Airbags mit Kett- und Schussgarnen, wobei zumindest überwiegend die Schussgarne im Gewebe jeweils aus mindestens zwei nebeneinander verlaufenden Garnen gebildet sind, bereit zu stellen, welches wirtschaftlich hergestellt werden kann.

Diese Aufgabe wird gelöst durch ein Gewebe für Airbags mit Kett- und Schussgarnen, wobei zumindest überwiegend die Schussgarne im Gewebe jeweils aus mindestens zwei nebeneinander verlaufenden Garnen gebildet sind, welches sich dadurch auszeichnet, dass mindestens eines der nebeneinander verlaufenden Garne ein verwirbeltes Multifilamentgarn ist, wobei einige der Filamente des Multifilamentgarns mit einigen Filamenten der benachbarten Garne verwirbelt sind.

Aufgrund dessen, dass mindestens ein Schussgarn ein verwirbeltes Multifilamentgarn ist, ist sichergestellt, dass nebeneinander angeordnete Schussgarne als Garne bestehen bleiben und den Charakter nebeneinanderliegender Garne beibehalten. Aufgrund dessen, dass einzelne Filamente des einen Schussgarnes mit einzelnen Filamenten des anderen neben dem einen Schussgarn verlaufenden Garnes verwirbelt sind, können solche Garne nunmehr gemeinsam und gleichzeitig in das Webfach eingetragen werden. Insofern wird deutlich, dass die erfindungsgemäßen Gewebe wirtschaftlicher herstellbar sind.

Die Herstellung der erfindungsgemäßen Gewebe kann beispielsweise dadurch erfolgen, dass bereits vorher miteinander verwirbelte Garne , von denen mindestens eines ein bereits verwirbeltes Garn sein muss, als Schussfäden eingesetzt werden. Wesentlich kostengünstiger ist es, das in DE 196 53 028 C1 beschriebene Verfahren anzuwenden, bei dem vor dem Zwischenspeichern des Schussgarnes dieses mittels einer Verwirbelungseinrichtung verwirbelt wird. Um die erfindungsgemäßen Gewebe zu erhalten, ist es lediglich erforderlich der in DE 196 53 028 C1 beschriebenen Verwirbelungseinrichtung die Garne gemeinsam zuzuführen, die im Gewebe nebeneinander in das Webfach eingetragen werden sollen. Durch diese Verwirbelung wird erreicht, dass die nebeneinanderliegenden Garne nach dem Eintrag in das Webfach zumindest in etwa dieselbe Länge und dieselbe Spannung aufweisen, und dass aufgrund dessen, dass mindestens einer dieser Garne vorher bereits verwirbelt war, die Garne im fertigen Gewebe noch als nebeneinander verlaufende Garne erkennbar sind, sodass sie mit den Geweben, bei denen nebeneinander liegende Schussfäden nacheinander eingetragen wurden, vergleichbar sind. Die erfindungsgemäßen Gewebe sind aber gegenüber den bekannten Geweben insofern unterschiedlich, dass zumindest einige Filamente der nebeneinander angeordneten Schussfäden miteinander verwirbelt sind.

Die erfindungsgemäß gestellte Aufgabe wird ebenfalls gelöst durch ein Gewebe, welches mindestens ein oberes und mindestens ein unteres Gewebe aufweist, welche obere und untere Gewebe in ausgewählten Bereichen zu einem einzigen Gewebe zusammen verwebt sind, wobei zumindest überwiegend die Schussfäden in den oberen und unteren Geweben aus mindestens zwei nebeneinander verlaufenden Fäden gebildet sind, dadurch gekennzeichnet, dass mindestens eines der nebeneinander verlaufenden Garne ein verwirbeltes Multifilamentgarn ist, wobei einige der Filamente des Multifilamentgarns mit einigen Filamenten der benachbarten Garne verwirbelt sind. Diese Gewebe weisen ebenfalls die geschilderten Vorteile auf.

Bei dem erfindungsgemäßen Gewebe hat es sich als besonders günstig herausgestellt, wenn jeweils 5 bis 25 % der Filamente der benachbarten Garne miteinander verwirbelt sind. Durch vielfältige Versuche hat es sich herausgestellt, dass bei einer Verwirbelung, bei der weniger als 5 % der Filamente des einen Garnes mit ebenfalls weniger als 5 % der Filamente eines zweiten Garnes verwirbelt sind, der Zusammenhalt der beiden Garne nicht genügend ist, dass die beiden Garne gemeinsam in das Webfach eingetragen werden können. Werden jeweils mehr als 25 % der Filamente der benachbarten Garne miteinander verwirbelt, verlieren die Garne ihre Eigenständigkeit, je mehr Filamente benachbarter Garne miteinander verwirbelt sind.

Für das erfindungsgemäße Gewebe ist es von besonderem Vorteil, wenn alle nebeneinander verlaufenden Schussgarne verwirbelte Mulitfilamentgarne sind. Hierbei können die verwendeten und miteinander verwirbelten Schussgarne alle aus demselben Material, beispielsweise aus einem Polyamid oder einem Polyester, bestehen. Zur Einstellung spezifischer Eigenschaften der erfindungsgemäßen Gewebe kann es jedoch auch vorteilhaft sein, Garne aus unterschiedlichen Materialien miteinander zu verwirbeln.

Die erfindungsgemäßen Gewebe zeichnen sich insbesondere dadurch aus, dass Kett- und/oder Schussgarne einen Titer von 235 bis 700 dtex und/oder dass die Einzelfilamente der Kett- und/oder Schussgarne einen Titer von nicht mehr als 5 dtex aufweisen. Für die Herstellung der erfindungsgemäßen Gewebe eignen sich besonders solche Garne, wie sie beispielsweise in EP 0 738 793 A1 beschrieben sind.

## Patentansprüche

1. Gewebe für Airbags mit Kett- und Schussgarnen, wobei zumindest überwiegend die Schussgarne im Gewebe jeweils aus mindestens zwei nebeneinander verlaufenden Garnen gebildet sind, **dadurch gekennzeichnet, dass** mindestens eines der nebeneinander verlaufenden Garne ein verwirbeltes Multifilamentgarn ist, wobei einige der Filamente des Multifilamentgarns mit einigen Filamenten der benachbarten Garne verwirbelt sind.

2. Gewebe, welches mindestens ein oberes und mindestens ein unteres Gewebe aufweist, welche obere und untere Gewebe in ausgewählten Bereichen zu einem einzigen Gewebe zusammen verwebt sind, wobei zumindest überwiegend die Schussfäden in den oberen und unteren Geweben aus mindestens zwei nebeneinander verlaufenden Fäden gebildet sind, **dadurch gekennzeichnet, dass** mindestens eines der nebeneinander verlaufenden Garne ein verwirbeltes Multifilamentgarn ist, wobei einige der Filamente des Multifilamentgarns mit einigen Filamenten der benachbarten Garne verwirbelt sind.

3. Gewebe nach Anspruch 1 oder 2, **dadurch gekennzeichnet, dass** jeweils 5 bis 25 % der Filamente der benachbarten Garne miteinander verwirbelt sind.

4. Gewebe nach Anspruch 1 bis 3, **dadurch gekennzeichnet, dass** alle nebeneinander verlaufenden Schussgarne verwirbelte Mulitfilamentgarne sind.

5. Gewebe nach einem oder mehreren der Ansprüche 1 bis 4, **dadurch gekennzeichnet, dass** Kett- und/oder Schussgarne einen Titer von 235 bis 700 dtex aufweisen.

6. Gewebe nach einem oder mehreren der Ansprüche 1 bis 5, **dadurch gekennzeichnet, dass** die Einzelfilamente der Kett- und/oder Schussgarne einen Titer von nicht mehr als 5 dtex aufweisen.

7. Gewebe nach einem oder mehreren der Ansprüche 1 bis 5, **dadurch gekennzeichnet, dass** sowohl die Kettgarne wie auch jeder der nebeneinander verlaufenden Schussgarne denselben Titer aufweisen.

## Claims

1. An airbag fabric with warp and weft yarns in which at least most of the weft yarns in the fabric comprise at least two contiguous yarns, **characterised in that** at least one of the contiguous yarns is an intermingled multifilament yarn, some filaments of the multifilament yarn being intermingled with some filaments of the yarns adjacent to it.

2. Fabric having at least one upper and at least one lower fabric, the upper and lower fabrics being interwoven in selected regions to form a single fabric, wherein at least most of the weft threads in the upper and lower fabrics comprise at least two contiguous yarns, **characterised in that** at least one of the contiguous yarns is an intermingled multifilament yarn, some filaments of the multifilament yarn being intermingled with some filaments of the yarns adjacent to it.

3. Fabric according to Claim 1 or 2, **characterised in that** 5 to 25% of the filaments of each of the contiguous yarns are intermingled with one another.

4. Fabric according to Claims 1 to 3, **characterised in that** all contiguous weft yarns are intermingled multifilament yarns.

5. Fabric according to one or more of Claims 1 to 4, **characterised in that** warp and/or weft yarns have a linear density of 235 to 700 dtex.

6. Fabric according to one or more of Claims 1 to 5, **characterised in that** the individual filaments of the warp and/or weft yarns have a linear density not exceeding 5 dtex.

7. Fabric according to one or more of Claims 1 to 5, **characterised in that** the warp yarns as well as each of the contiguous weft yarns have the same linear density.

## Revendications

1. Tissu pour coussin gonflable de sécurité, qui présente des fils de chaîne et des fils de trame, au moins la majorité des fils de trame du tissu étant formée d'au moins deux fils qui s'étendent l'un à côté de l'autre, **caractérisé en ce qu'**au moins l'un des fils qui s'étendent l'un à côté de l'autre est un fil multifilaments tourbillonné, certains des filaments de fils multifilaments étant tourbillonnés avec certains filaments des fils voisins.

2. Tissu qui présente au moins une nappe tissée supérieure et au moins une nappe tissée inférieure, la nappe tissée supérieure et la nappe tissée inférieure étant tissées ensemble pour former un unique tissu dans des zones sélectionnées, au moins une majorité des fils de trame de la nappe tissée supérieure et de la nappe tissée inférieure étant formée d'au moins deux fils qui s'étendent l'un à côté de l'autre, **caractérisé en ce qu'**au moins l'un des fils qui s'étendent l'un à côté de l'autre est un fil multifilaments tourbillonné, certains des filaments du fil multifilaments étant tourbillonnés avec certains filaments des fils voisins.

3. Tissu selon les revendications 1 ou 2, **caractérisé en ce que** 5 à 25 % des filaments des fils voisins sont tourbillonnés les uns avec les autres.

4. Tissu selon les revendications 1 à 3, **caractérisé en ce que** tous les fils de trame qui s'étendent les uns à côté des autres sont des fils multifilaments tourbillonnés.

5. Tissu selon l'une ou plusieurs des revendications 1 à 4, **caractérisé en ce que** les fils de chaîne et/ou les fils de trame présentent un titre compris entre 235 et 700 dtex.

6. Tissu selon l'une ou plusieurs des revendications 1 à 5, **caractérisé en ce que** les différents filaments des fils de chaîne et/ou des fils de trame ont un titre non supérieur à 5 dtex.

7. Tissu selon l'une ou plusieurs des revendications 1 à 5, **caractérisé en ce que** tant les fils de chaîne que chacun des fils de trame qui s'étendent les uns à côté des autres ont le même titre.
